# EUROPEAN PATENT APPLICATION

(11) **EP 2 842 644 A1**
(43) Date of publication of application: **04.03.2015**
(21) Application number: 13182485.6
(22) Date of filing: 30.08.2013
(51) Int. Cl.: B08B 9/032, B61D 35/00

(54) **Cleaning device for a waste water system of a train**

(71) Applicant: Evac GmbH, 22880 Wedel (DE)
(72) Inventor: Oremek, Peter, 22880 Wedel (DE); Autzen, Matthias, 22880 Wedel (DE)
(74) Representative: Eisenführ Speiser

(57) **Abstract**

The invention is directed to a cleaning device for a waste water system of a train, comprising a cleaning liquid control unit having a heating device (24) for heating a cleaning liquid, a cleaning liquid line system for connecting said cleaning liquid control unit to the waste water system, a pump (40) for pumping the cleaning liquid through the cleaning liquid line system wherein said cleaning liquid line system comprises a first cleaning liquid line (31) with a first connector (60), a second connector (50) for connecting said cleaning liquid control unit to a waste water line (11) of said waste water system. According to the invention, said first connector is adapted to be directly connected to an exit of the waster water line of the train's waste water system into said waste water tank of the system. This allows to directly draw the cleaning liquid out of the waste water line and to avoid that the cleaning liquid is filled into the waste water tank. It is thus not required to collect the cleaning liquid in the waste water tank to draw the cleaning liquid through the cleanout or drain line or opening of the waste water tank back into the cleaning liquid reservoir.

## Description

The invention is directed to a cleaning device for a waste water system of a train, comprising a cleaning liquid control unit having a heating device for heating a cleaning liquid, a cleaning liquid line system for connecting said cleaning liquid control unit to the waste water system, a pump for pumping the cleaning liquid through the cleaning liquid line system wherein said cleaning liquid line system comprises a first cleaning liquid line with a first connector, a second connector for connecting said cleaning liquid control unit to a waste water line of said waste water system.

Waste water systems of trains and train wagons usually comprise a system of tubes, pipes and/or hoses directing waste water from a lavatory or a toilet to a waste water tank. In use, debris, precipitations and any further deposits may accumulate in the piping of such a waste water system. To ensure the function of the waste water system it is required to remove such depositions after a pre-determined time period of use or after a pre-determined amount of waste water being disposed into said waste water tank.

Cleaning devices of the afore mentioned type are known to be used for cleaning a waste water system of a train according to a method for cleaning such waste water system. These cleaning devices and the method for cleaning requires to connect a supply line to an inlet of the waste water system for pumping a cleaning liquid through said waste water system into the waste water tank of the train's waste water system. Further, to allow circulation of the cleaning liquid, a return line is connected to the cleanout opening of the waste water tank to direct the cleaning liquid which is collected in the waste water tank back to a cleaning liquid reservoir which is part of the cleaning device. The cleaning unit is then heated in said reservoir to a certain temperature accelerating the cleaning process and then circulated through said waste water line into said waste water tank, collected in said waste water tank and drained out of said waste water tank via said cleanout opening and returned into the reservoir to be pumped again into the waste water line of the train. Due to technical restrictions of the design of the waste water tank and due to its large volume the waste water tank is only partly filled with cleaning liquid and a siignificant amount of residual air remains therein. This, however is not considered as a relevant drawback of current cleaning systems since the waste water tank must be cleaned in the course of regular drain intervals, anyway.

To make sure that any debris, deposits and the like is completely removed from said waste water system it is required to circulate the cleaning liquid through said waste water line with a high volume flow rate to avoid any parts of the waste water system or parts of the cross-section of the waste water line preserving captured air and thus not coming into contact with the cleaning liquid. This need results in the waste water tank being filled rather quick with the cleaning liquid and thus requires the return line to have a strong pump delivering the same high volume flow rate back into the cleaning liquid reservoir. Furthermore, to ensure that the pumps always provide cleaning liquid and do not draw air a large amount of cleaning liquid is required in said reservoir. Both the supply line and the return line need to be equipped with a pump and the control of these two pumps must be very exact to avoid overflow of the reservoir or the waste water tank.

It is an object of the invention to provide a method for cleaning a waste water system of a train and a cleaning device for such purpose which reduces the energy required for such cleaning process.

This problem is solved by a cleaning device as described in the introductory portion, wherein said first connector of the first cleaning liquid line is adapted for connecting said connector directly to an exit of a waste water line directing waste water into a waste water tank of the waste water system.

According to the invention, a cleaning device is provided wherein said first connector is adapted to be directly connected to an exit of the waster water line of the train's waste water system into said waste water tank of the system. This allows to directly draw the cleaning liquid out of the waste water line and to avoid that the cleaning liquid is filled into the waste water tank. It is thus not required to collect the cleaning liquid in the waste water tank to draw the cleaning liquid through the cleanout or drain line or opening of the waste water tank back into the cleaning liquid reservoir.

In the meaning of this description and the claims it is to be understood that a direct connection of the first cleaning liquid line to a waste water line defines a connection wherein any liquid flowing through that said waste water line is directly supplied into said first cleaning liquid line in contrast to said cleaning liquid being supplied into the waste water tank and thereafter supplied into said cleaning liquid line connected to an exit opening of said waste water tank, a drain line or the like. By this important difference it is possible to establish a circular flow of the cleaning liquid through the waste water line to be cleaned without any components being involved in said circular flow wherein an air reservoir is preserved. Instead, the cleaning device according to the invention allows to establish a closed system free of air inside the circular flow of the cleaning liquid htrough the supply line, the return line and the lines of the waste water system to be cleaned. Preferably, the reservoir of the cleaning device may be free of air, too, but in some embodiments air may be present in the reservoir.

Further , it is possible to reduce the flow rate of the cleaning liquid significantly. Further, it is possible to conduct the cleaning process with a cleaning device having a single pump only since it is not required to actively empty the waste water tank using a separate pump connected to the drain or cleanout line of the tank. Furthermore, the amount of cleaning liquid required in the system is significantly reduced since the flow rate can be selected to be much lower and the waste water tank is not included in the circuit and thus not partially filled with cleaning liquid. This significantly reduces the damage if any leakage occurs during the cleaning process.

Generally, the return line is not connected to an exit opening of the waste water tank outside the waste water tank. Instead, the first connector is adapted to be connected to an end of the waste water line which directs waste water into the waste water tank.

According to the invention, the first connector may be adapted to be connected to the waste water line inside the waste water tank. This adaption of the first connector may require a section of the supply line or the first connector which is bent to allow insertion of the first connector through a amnhole of tzhe waste water tank and connecting of the first connector to an end of the waste water line inside the waste water tank which is at an angular arrangement to said manhole. A guiding device attached to the first connector at one end and having a ahnmdle at the other end may be provided to facilitate ahndling of the first connector from outside the waste water tank.

Alternatively, the first connector may be connected to the waste water line outside the waste water tank, e.g. by a branch connection shortly before the waste water line enters into the waste water tank. In this option valves must be provided to shut-off the flow of cleaning liquid through the waste water line into the waste water tank behind said branch connection and a short section of the waste water line including said shut-off valve is not cleaned in the cleaning process.

According to a first preferred embodiment the cleaning device comprises a cleaning liquid reservoir connected to said cleaning liquid line system, wherein said cleaning liquid reservoir has a capacity of less than 75 litres, preferably less than 50 litres. This particular embodiment allows the use of a rather small cleaning liquid reservoir which is made possible by the specific connectors of the cleaning device and the specific circuit provided with cleaning liquid by said connectors out of the reservoir.

According to a further preferred embodiment said cleaning liquid reservoir is comprised in said cleaning liquid control unit and said heating device is included in said cleaning liquid reservoir. It has been shown that heating of the cleaning liquid is particular useful to accelerate the cleaning process and heating may effectively be conducted in the cleaning liquid reservoir.

According to a further preferred embodiment said pump has a pumping rate of less than 20 litres per minute, preferably of less than 10 litres per minute. According to the invention it is no longer required to provide the cleaning liquid with a high flow rate through the waste water system to ensure complete wetting and thus cleaning of the surfaces to be cleaned. Instead, a close circuit without entrapped air is established thus allowing to significantly reduce the flow rate of the cleaning liquid and thus to reduce the energy required for circulating the cleaning liquid.

According to a further preferred embodiment said first connector is adapted for being coupled to different pipe ends wherein said pipe ends differ in the outer and/or inner pipe diameter. Whereas usual cleaning devices are connected to the waste water tank via a drain or a cleanout opening which often has standardized dimensions and geometry, the cleaning device according to the invention is to be coupled to the waste water line directing the waste water into the waste water tank. Such connection can often be established inside the waste water tank, wherein said waste water line extends for a certain distance into the waste water tank. However, the dimension of said waste water line extending into the waste water tank is usually not standardized and thus the end of the waste water line inside said waste water tank may have different dimensions or diameters. To allow the use of the cleaning device according to the invention at different waste water systems of different trains it is thus useful to provide a connector which can be coupled to different pipe ends having different inner diameter and/or outer diameter. This allows the use of the cleaning device at a variety of waste water systems.

According to further preferred embodiment said first connector comprises an elastomeric element capable to be extended to a larger diameter and/or to compressed to a smaller diameter, for sealing the coupling to a pipe end of said waste water line, wherein said elastomeric element preferably comprises an inflatable inner volume for varying an outer or inner diameter of the elastomeric element. This preferred embodiment allows to quickly connect the first cleaning liquid line to the waste water line in said waste water tank and further allows to connect the first cleaning liquid line to a variety of waste water lines having different dimensions and/or diameters. The inflatable element may be adapted to be inflated with a fluid like air or water and maybe arranged and dimensioned such a way that by such inflating of said inflatable element an inner diameter defined by said inflatable element is reduced or an outer diameter defined by said inflatable element is increased. This particular embodiment thus allows to connect the first connector to a waste water line by arranging the inflatable element around the outer wall surface of said waste water line and to thereafter establish a sealing engagement by inflating said inflatable element or to connect said first connector by introducing said inflatable element into a waste water line and to thereafter establish a sealing engagement by inflating said inflatable element. This embodiment is in particular useful since very often the waste water line emptying into the waste water tank can hardly be reached and must be reached through a manhole in the waste water tank or the like. This will not allow to conduct a screwing or any other dedicated action for establishing a form-locking connection to said waste water line or for applying a clamping force. In this embodiment, the connection can easily be achieved by inflating said inflatable element thus applying a sealing engagement which at the same time secures the first connector on or in the waste water line inside said waste water tank to prevent unintended release of the first connector from said waste water line.

It is then further preferred that said inflatable element is generally ring-shaped to seal against a tubular pipe. This embodiment particularly addresses the geometry of common waste water lines inside waste water tanks and gives a particular preferred geometry of the inflatable element which may e.g. have a general circular cross-section.

According to a further preferred embodiment said inflatable element comprises a double walled tube section wherein at least an inner wall or an outer wall of said tube section is made out of an elastomeric material. This preferred embodiment provides a safe and robust way of connecting the connector to the waste water line for establishing a good sealing effect and a sufficient frictional engagement of the inflatable element to the waste water line to prevent unintended release of the connection.

A further aspect of the invention is a method for cleaning a waste water system of a train wagon comprising the steps: connecting a cleaning liquid control unit to said waste water system, circulating a cleaning liquid through said cleaning liquid control unit and said waste water system, wherein said cleaning liquid control unit is connected to said waste water system via a first cleaning liquid line having a first connector and via a second connector for connecting said cleaning liquid control unit to a waste water line of said waste water system, wherein said first connector of the first cleaning liquid line is connected directly to a waste water line exit directing waste water into said waste water tank.

The method according to the invention is characterized by the direct connection of the first cleaning liquid line to a waste water line which directs the waste water into said waste water tank. Usually, this connection will be established inside the waste water tank, namely to an end of the waste water line which is arranged inside the waste water tank. This often can be accomplished by reaching through a manhole of the waste water tank and manually coupling said first connector to the waste water line exit.

The method may be further improved in that the waste water system wherein said cleaning liquid is circulated is evacuated from air and completely filled with cleaning liquid. By evacuating the air out of the waste water line all surfaces of the waste water line come into contact with cleaning liquid and thus are effectively cleaned without the need for a high flow rate of said cleaning liquid.

It is further preferred that the cleaning liquid is circulated at a flow rate of less than 20 litres per minute, preferably of less than 10 litres per minute. By such low flow rate of the cleaning liquid energy can be saved and the need for a high amount of cleaning liquid can be avoided.

It further preferred that the cleaning liquid is filled into the waste water system out of the cleaning liquid control unit into an inlet of said waste water system, exits the waste water system out of said waste water line exit, hereafter enters the cleaning liquid control unit and is circulated by a pump. This establishes an effective circuit for circulating the cleaning liquid at a small flow rate with a low amount of cleaning liquid required to conduct an effective cleaning of the waste water line.

Still further it is preferred that said first cleaning liquid line is sealingly coupled to said waste water line exit by inflating a sealing element which is part of said first connector. This can be further improved in said sealing element is a ring shaped hollow element which is inserted into said waste water line exit and inflated to be sealingly pressed against the inside wall of said waste water line exit, or arranged around said waste water line exit and inflated to be sealingly pressed against the outside wall of said waste water line exit. According to these two preferred embodiments a reference is made to the above description explaining the particular function, usefulness and properties of the cleaning device according to invention comprising such inflatable element.

Preferred embodiments of the invention are described with referenced to the following figures.

Short description of the figures:
- Figure 1:: shows a schematic flow diagram of a cleaning device connected to a waste water system of train to conduct a cleaning method according to a preferred embodiment of the invention.
- Figure 2:: shows a longitudinal sectional view of a first preferred embodiment of a connector for connecting a cleaning liquid line to a waste water line inside a waste water tank of a train.
- Figure 3:: shows a longitudinal sectional view of a second preferred embodiment of a connector for connecting a cleaning liquid line to a waste water line inside a waste water tank of a train.
- Figure 4:: shows a longitudinal sectional view of a third preferred embodiment of a connector for connecting a cleaning liquid line to a waste water line inside a waste water tank of a train.

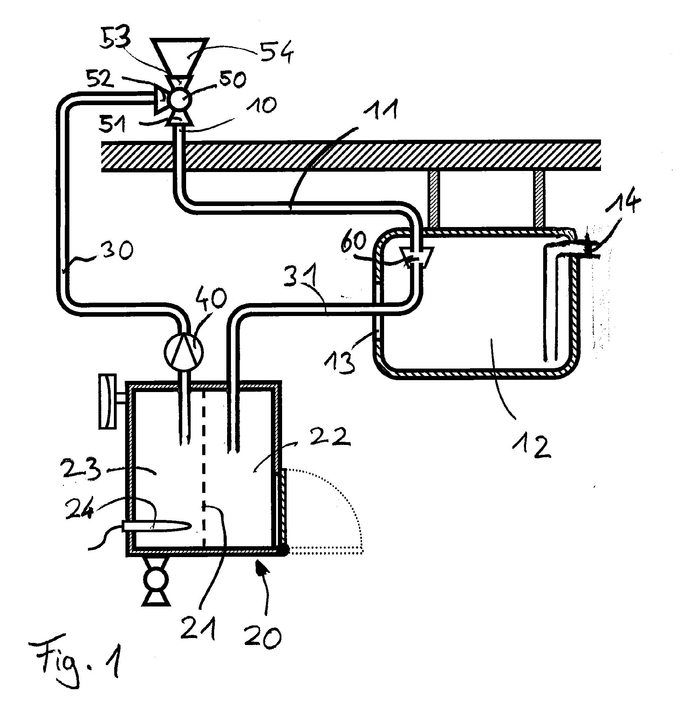

Referring first to figure 1, a waste water system of a train comprises a waste water inlet opening 10 inside the train which may be connected to a sanitary or a toilet in regular use. Extending from said waste water inlet is a waste water line 11 which usually is arranged below the floor of the train or train wagon and may have a length ranging from 1 to 20 meter. The waste water line is connected to a waste water tank 12 in such a way that the exit of the waste water line 11 is directed trough the wall of the waste water tank 12 into the inside of the waste water tank 12 and the waste water line 11 extends a certain distance into said waste water tank 12. The waste water tank 12 is arranged below the floor of the train or train wagon. A manhole 13 is provided at the waste water tank 12 to allow maintenance and service inside the waste water tank 12.

The waste water tank 12 further can be emptied via a clean out or drain line 14 shown in the figure. It is to be understood that the inlet opening 10, the waste water line 11, the waste water tank 12, the manhole 13 and the drain line 14 are not part of the cleaning device according to the invention but instead are installed on board of the train.

Figure 1 shows the waste water system of the train being connected to a cleaning device for cleaning the waste water line.

A cleaning device according to the invention comprises a cleaning liquid reservoir 20 which is divided into two sections by a vertical extending screen, filter or membrane 21. This screen 21 divides the cleaning liquid reservoir in an inlet section 22 and an outlet section 23.

An electrical heating element 24 is arranged in the lower part of the outlet section 22. Said heating element 24 is controlled in such a way to heat up the cleaning liquid to a predetermined temperature and to hold the cleaning liquid and said temperature during the cleaning process.

A cleaning liquid supply line 30 is connected to the outlet section 22 of the cleaning liquid reservoir. A cleaning liquid pump 40 is interconnected into said cleaning liquid supply line 30 for pumping the cleaning liquid and thus circulating the cleaning liquid. It is to be understood that the pump 40 could be arranged at any other position of the circuit established by the cleaning device according and the waste water system to the invention.

The cleaning liquid supply line 30 extends from the cleaning liquid reservoir to a 3-way valve 50. The 3-way valve 50 is connected with one connector 51 to the inlet opening 10 of the waste water system of the train, with a second opening 52 to the cleaning liquid supply line 30 and with a third opening 53 to a chute 54 for filling cleaning liquid into the system. The 3-way valve 50 may be switched in a first position wherein the chute 54 is connected to the inlet opening of the waste water system and to a second position wherein the cleaning liquid supply line 30 is connected to the inlet opening 10 of the waste water system. When conducting the cleaning process according to the invention, the 3-way valve 50 is firstly switched to the first position and cleaning liquid is filled into the waste water system and, if required, the cleaning device until the circuit is free of any air. For this purpose, the chute 54 is arranged at the highest position with reference to gravity.

A cleaning liquid return line 31 is connected to the inlet section 23 of the cleaning liquid reservoir 20. The cleaning liquid return line 31 extends from said cleaning liquid reservoir and is shown to be directed through the manhole 13 of the waste water tank 12 to a connector 60. The cleaning liquid return line 31 is coupled to the waste water line 11 inside said waste water tank 12 by said connector 60.

The cleaning liquid flowing through said 3-way valve 54 into the waste water line 11 is drawn out of said waste water line 11 by said cleaning liquid return line 31 via said connector 60. The cleaning liquid is returned into the cleaning liquid reservoir through said return line 31, filtered by said screen 21 and pumped by said pump 40 through said cleaning liquid supply line 30 to the 3-way valve 50 again. By this, a circuit is established which is free of air to circulate the cleaning liquid at elevated temperature through the waste water line 11 to be cleaned.

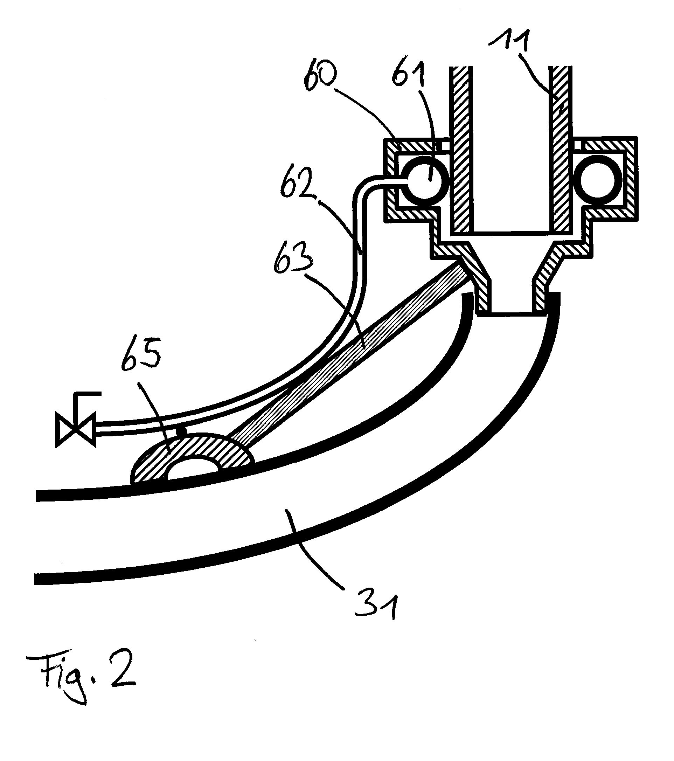

Figure 2 shows in greater detail the end of the cleaning liquid return line 31 reaching into the waste water tank 12 and the connector 60. As can be seen, the connector 60 may comprise a ring-shaped, tubular element 61 which is connected via a compressed air supply line 62 to a source of compressed air (not shown). Said tubular element 61 may be arranged around the exit end of the waster water line 11 inside the waste water tank 12 and hereafter inflated to establish a sealing and frictional engagement of the connector 60 to said waste water line 11. The cleaning liquid return line 31 extends from said connector 60 through the manhole 13 out of the waste water tank 12. To facilitate mounting of the connector 60, a rod or beam 63 is coupled to the connector 60 and may be manually operated by a grip 65.

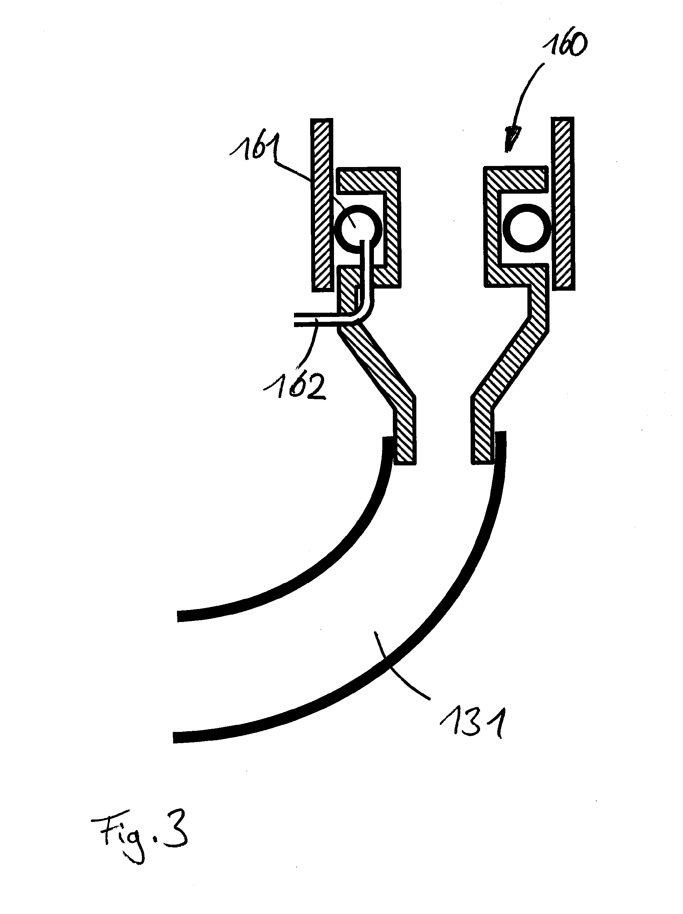

Figure 3 shows an alternative embodiment of a connector 160. This embodiment is particularly well suited for waste water lines having a very large inner diameter. As can be seen, the connector 160 comprises a ring shaped tubular element 161 which is arranged inside a housing defining a ring structure which is opened to the outside. The tubular element 161 is connected to a pressurized source via a pressure supply line 162. When inflating the tubular element, the outer diameter of the ring defined by the tubular element is increased thus establishing a sealing and frictional engagement to the inner wall surface of the exit end of a waste water line.

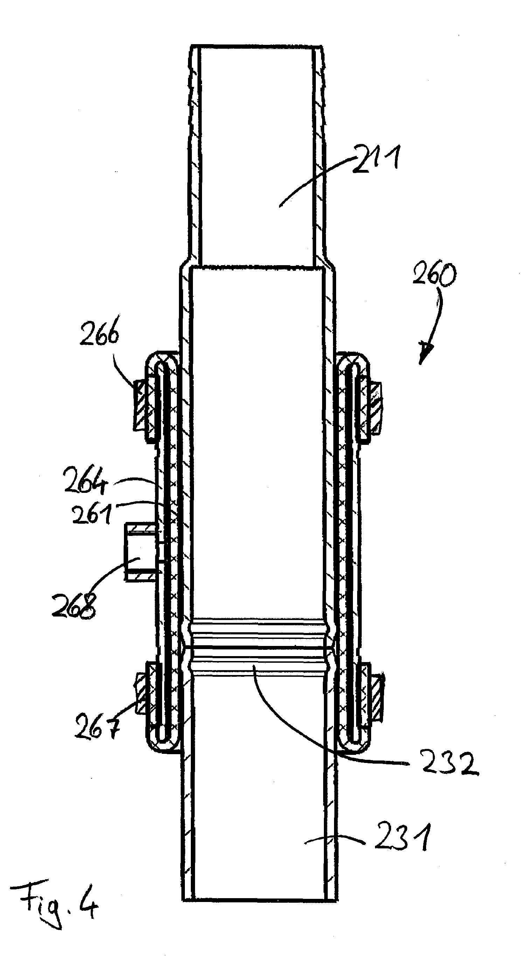

Figure 4 shows a further preferred embodiment of a connector 260. As can be seen, this embodiment comprises a tube 264 made of a rigid material like stainless steel or a structural rigid plastic. An elastomerictube 261 is arranged inside said rigid tube 264. Said elastomeric tube 261 may have a slightly smaller diameter than the ridged tube 261.

At both the upper and the lower end of the rigid tube 264 the elastomerictube 261 is everted such that an end of the elastomerictube is positioned on the outer surface of the rigid tube in both the upper and the lower end region of said rigid tube. This everted end of the elastomerictube is fixed to the rigid tube by an upper and a lower pipe clamp 266, 267 to thus establish a sealing between the everted part of the elastomerictube 261 and the rigid tube at both ends. By this connection between the elastomeric tube 261 and the rigid tube 264, a closed volume having a ring-shaped geometry is established between the rigid tube and the elastomeric tube on the inner side of the rigid tube.

A compressed air opening 268 is provided in the rigid tube connecting said closed volume to a source of compressed air. When supplying compressed air to said compressed air volume, the closed volume is inflated and thus the elastomeric tube is pressed to the inside to form a smaller diameter. This allows to provide a sealing and frictional engagement of the elastomeric tube to an exit end 211 of a waste water line and an inlet end 232 of a cleaning liquid return line 231 as shown in the figure 4.

## Claims

1. A cleaning device for a waste water system of a train, comprising:
- a cleaning liquid control unit having a heating device for heating a cleaning liquid
- a cleaning liquid line system for connecting said cleaning liquid control unit to the waste water system,
- a pump for pumping the cleaning liquid through the cleaning liquid line
system
wherein said cleaning liquid line system comprises
- a first cleaning liquid line with a first connector,
- a second connector for connecting said cleaning liquid control unit to a
waste water line of said waste water system,
**characterized in that** said first connector of the first cleaning liquid line is adapted for connecting said connector directly to an exit of a waste water line directing waste water into a waste water tank of the waste water system.

2. Cleaning device according to claim 1,
**characterized by** a cleaning liquid reservoir connected to said cleaning liquid line system, wherein said cleaning liquid reservoir has a capacity of less than 75 liters, preferably less than 50 liters.

3. Cleaning device according to claim 2,
**characterized in that** said cleaning liquid reservoir is comprised in said cleaning liquid control unit and said heating device is adapted to heat said cleaning liquid in said cleaning liquid reservoir.

4. Cleaning device according to any of the preceding claims,
**characterized in that** said pump has a pumping rate of less than 20 liters per minute, preferably of less than 10 liters per minute.

5. Cleaning device according to any of the preceding claims,
**characterized in that** said first connector is ring-shaped to be adapted for being coupled to different pipe ends wherein said pipe ends differ in the outer and/or inner pipe diameter.

6. Cleaning device according to any of the preceding claims,
**characterized in that** said first connector comprises an elastomeric element capable to be extended to a larger diameter and/or to compressed to a smaller diameter, for sealing the coupling to a pipe end of said waste water line, wherein said elastomeric element preferably comprises an inflatable inner volume for varying an outer or inner diameter of the elastomeric element.

7. Cleaning device according to claim 6,
**characterized in that** said inflatable element is ring-shaped to be adapted to seal against a tubular pipe.

8. Cleaning device according to claim 6 or 7,
**characterized in that** said inflatable element comprises a double walled tube section wherein at least an inner wall or an outer wall of said tube section is made out of an elastomeric material.

9. A method for cleaning a waste water system of a train wagon, comprising the steps:
- Connecting a cleaning liquid control unit to said waste water system
- Circulating a cleaning liquid through said cleaning liquid control unit and said waste water system,
wherein said cleaning liquid control unit is connected to said waste water system via a first cleaning liquid line having a first connector and via a second connector for connecting said cleaning liquid control unit to a waste water line of said waste water system,
**characterized in that** said first connector of the first cleaning liquid line is connected directly to a waste water line exit directing waste water into said waste water tank.

10. Method according to claim 9,
**characterized in that** the waste water system wherein said cleaning liquid is circulated is evacuated from air and completely filled with cleaning liquid.

11. Method according to claim 9 or 10,
**characterized in that** the cleaning liquid is circulated at a flow rate of less than 20 liters per minute, preferably of less than 10 liters per minute.

12. Method according to any of claims 9 to 11,
**characterized in that** the cleaning liquid is filled into the waste water system out of the cleaning liquid control unit into an inlet of said waste water system, exits the waste water system out of said waste water line exit, hereafter enters the cleaning liquid control unit and is circulated by a pump.

13. Method according to any of claims 9 to 12,
**characterized in that** said first cleaning liquid line is sealingly coupled to said waste water line exit by inflating a sealing element which is part of said first connector.

14. Method according to claim 13,
**characterized in that** said sealing element is a ring shaped hollow element which is
- inserted into said waste water line exit and inflated to be sealingly pressed against the inside wall of said waste water line exit, or
- arranged around said waste water line exit and inflated to be sealingly pressed against the outside wall of said waste water line exit.

15. Method according to any of the claims 9-14,
**characterized in that** the first connector is connected to the waste water line inside the waste water tank.
